# EUROPEAN PATENT SPECIFICATION

(11) **EP 2 818 774 B1**
(45) Date of publication and mention of the grant of the patent: **20.02.2019**
(21) Application number: 14425075.0
(22) Date of filing: 18.06.2014
(51) Int. Cl.: F16K 3/26

(54) **Regulating valve**
Regulierventil
Soupape de régulation

(30) Priority: 24.06.2013 IT VI20130159
(43) Date of publication of application: 31.12.2014
(73) Proprietor: Carel Industries S.p.A., 35020 Brugine (PD) (IT)
(72) Inventor: Nalini, Luigi, 35020 Brugine (PD) (IT); Scarabottolo, Davide, 35020 Brugine (PD) (IT); Cazzin, Daniele, 35020 Brugine (PD) (IT)
(74) Representative: De Giorgi, Michele

(56) References cited:
- EP-A1- 1 830 115
- WO-A1-01/94817
- WO-A1-2010/060565
- DE-A1-102010 008 167
- GB-A- 2 405 920
- US-A1- 2008 035 225

## Description

The present invention relates to a regulating valve particularly suitable for fridge apparatuses and to its production method.

In particular, the present invention relates to a regulating valve provided with a balancing system of the pressures on the shutter.

The regulating valve herein is especially suitable to be used as a rolling valve for fridge fluids, for example CO2.

Therefore, the present invention is set in the field of regulating valves for fluids flow.

A first model of the valve known today in the field of regulating valves for fridge fluids flow, comprises a body and a shutter slidable in the body. The body is crossed by a pipe comprised of two vanes and by a seat for the shutter that divides the two vanes.

The shutter has a cylindrical side surface extending between a front end and a back end of the shutter.

The seat is cylindrical in order to couple with the shutter and provided with a plurality of through openings.

The shutter is slidable in the seat between a complete shutting position, in which its side wall covers the apertures by closing them and a position of complete aperture in which the shutter does not cover the apertures.

The sliding of the shutter in the seat is driven by an engine suitable to module the position of the shutter along the seat, to regulate the opening of the valve.

In addition, it is provided an offset channel that puts in communication a hole created on the front end of the shutter with the area in front of the back end, to balance the pressures that act upon the shutter's ends during the use of the valve.

From a functional standpoint, when using the valve, the pressure of the fluid pushing on the back end of the shutter is substantially equal to the pressure of the fluid in the hole.

A drawback of this first model of a traditional valve is characterized by the fact that during the use of the same a force results acting on the shutter, deriving from the action of the fluid, nothing along the direction of sliding of the same shutter.

This needs to support correspondingly the shutter in the seat and to envision an actuation drive of the shutter with superior performances, thus costly, to counterbalance such a force to ensure a reliable regulation of the valve aperture.

A second model of a valve known today is comprised of a body crossed by a pipe and a shutter sliding in the body to intercept the pipe.

In particular, the channel is comprised of two vanes and one seat for the shutter which divides the vanes.

The shutter has a conical head fit to couple with a compliantly counterbore edge of the seat, to close the pipe.

Furthermore, the shutter has a balancing wall disposed at the opposite end of the conical head.

The conical head has one or more holes which are in communication with the balancing wall.

While this second model of the valve is in use, the pressure of the fluid pushing on the balancing wall is equal to the pressure in the holes, or is equal to an average of the pressures in the holes as much as these latter have different values in different holes.

In practice, due to the unevenness of the fluid pressure acting on the conical head, the pressure forces acted by the fluid on the shutter result unbalanced and therefore, the actuating drive of the shutter is sized so to compensate for the predictable maximum forces, to the advantage of the structural simplicity of the valve and of the economic convenience of it. Further regulating valves known today are described in patents no. US2008/035225, WO2010/060565, EP1830115 and DE102010008167.

In particular in patent US2008/035225 is disclosed a regulating valve in accordance with the preamble of claim 1 affixed.

A drawback of this traditional valve is the fact that the variation capacity during the opening and closing of the valve often results not suitable for applications in which a fine tuning or a particularly fast opening is requested.

The problem at the core of the present invention is having a variation of the capacity during the opening or closing of the ascending or descending valve in a preset manner.

The main task of the present invention is to create a regulating valve that offers a solution to such a problem resolving the reported drawbacks of the regulating valves above-disclosed.

Within such task an objective of the present invention is to suggest a regulating valve having a passing section of the fluid that varies, during the opening and closing of the valve, in accordance with a preset ascending and descending function of the shutter run.

An other objective of the present invention is to use drives with smaller sizes with respect to the traditional valves, while maintaining one at least equal reliability.

Another objective of the present invention is to create a regulating valve which allows an easier regulation of the fluid flow as compared with the traditional regulating valves.

Still another objective of the present invention is to suggest a regulating valve that requests a lesser maintenance with respect to the traditional regulating valve.

A further objective of the present invention is to create a regulating valve structurally simpler than the traditional valves.

Yet another objective of the present invention is to provide a regulating valve easy to create and for which is simple to define passing sections dedicated to the specific application of the valve itself.

Yet another objective still in the present invention is to suggest a regulating valve which allows for the use of drives fit to provide a minor torque as compared to those used in the traditional valves, while maintaining at least equal global performances of the valve.

Another objective, still in the present invention is characterized by suggesting a production method of a regulating valve which is easier to realize as compared to the traditional processes.

This task, though these and other objectives which will best appear hereinbelow, are reached by a regulating valve in accordance with appended claim 1, which is herein incorporated by reference.

Detailed features of the regulating valve in accordance with the invention are disclosed in the corresponding dependent claims, which are herein recalled.

The tubular shape of the front end of the regulating valve in accordance with the invention allows to strongly reduce the pressure stresses exerted by the fluid on the shutter during the use of the valve, allowing the use of drives with smaller sizes as compared to the traditional valves and to have a stronger reliability of the flow regulation as compared to these latter.

In particular, the configuration of the front end of the shutter, which preferably shows the side openings spaced from the free edge of the front end itself, reduces appreciably the effect of the dynamic pressure of the fluid on the shutter itself.

In fact, while in use, when the shutter is not in the closing position, the fluid shows the faster speed correspondingly to the apertures.

Therefore, the component of the stress exerted by the fluid on the shutter correspondingly to the apertures, along the sliding direction, is substantially balanced as it acts on the edges of the apertures themselves which can have an extension strongly less than the surfaces on which acts the fluid at a faster speed in the traditional valves.

The configuration of the regulating valves in accordance with the invention allows to have, while in use, the stresses exerted by the fluid on the less variable shutter and of a lesser entity as compared with those of the traditional valves, permitting to simplify the structure of the valve itself and to reduce its encumbrances.

The cusp shape of the opening serves to be easily shaped, during the creation, so that during the use of the valve increases of the valve passing section are achieved, varying according to the preset features of the sliding of the shutter, wherein such features are dedicated to the specific use of the regulating valve.

Further characteristics and advantages of the invention will result mainly from the disclosure of a preferred embodiment, but not exclusive of the regulating valve in accordance to the invention, showed as an example only, and not limitative in the jointed drawings, in which:
Figure 1 shows a section view of the valve according to the invention;
Figure 2 shows a perspective view of the valve shutter of Figure 1;
Figures 3a, 3b, and 3c show three configurations of the regulating valve shutter of Figure 1;
Figures 4a, 4b, 4c, 4d, and 4e show alternative profiles of the shutter's openings;
Figure 5 shows a variation diagram of the capacity related to the shutter's run.

With a specific reference to the figures above-mentioned, it is globally indicated with reference number 10, a regulating valve, particularly but not exclusively, suitable to be used in fridge apparatuses.

This regulating valve 10 is preferably suitable to be used as a rolling valve for fridge fluids, for example for the regulation of a CO2 flow.

From a structural standpoint, the regulating valve 10 comprises:
- a body 11 crossed by a channel 12 for a fluid,
- a shutter 13 slidable in the body 11, according to a sliding direction A, between a closing position in which the shutter occludes a closing position wherein the shutter occludes the channel 12, and an opening position in which the channel 12 is opened.

The channel 12 is equipped with a seat 14, for the shutter 13, provided with an internal surface 15 parallel to the sliding direction A.

The shutter 13 protrudes along the sliding direction A between a back end 16 and a front end 17.

The front end 17 is provided with a side surface 18 parallel to the sliding direction A and connectible with the internal surface 15 of seat 14. Preferably, the front end 17 is provided with a sealing member, not shown, housed in a recess and fit to abut against a background surface provided on the edge of seat 14 when the shutter is in the closing position, to secure the hermetic closure of the valve.

The ends 16 and 17 of the shutter 13 are in reciprocal communication to balance the fluid pressure acting on them.

The front end 17 is tubular and has at least an opening 20 crossable by a fluid in accordance with a perpendicular direction to the sliding direction (A).

The regulating valve 10 is configured so that, when the shutter 13 is in the closing position each opening 20 is closed from the internal surface 15 of said seat 14, which covers it, and when the shutter 13 is in the opening position then the opening 20 presents at least a free portion 200 through which the fluid can pass.

According to the invention, the regulating valve 10 presents a particular peculiarity since the opening 20 has two sides 20a, 20b that join to form a cusp and diverge along the sliding direction A.

The profiles of the sides 20a, 20b are chosen in such a way to determine a predefined feature of variation of the section of the free portion 200 afloat the shutter's run A.

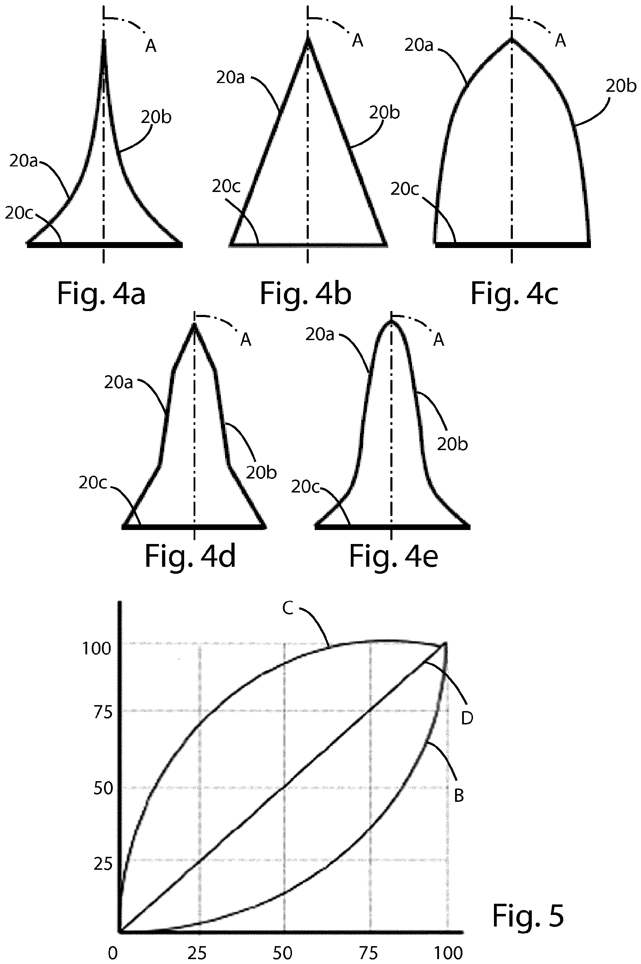

In figures 4a, 4b, and 4c are illustrated, as an example and not limitative, three examples of opening 20 shapes and of the sides 20a and 20b which, in such figures are symmetric with respect to the sliding direction A and, respectively, concave, straight, or convex.

In figures 4d and 4e are exemplified two other opening 20 shapes in accordance with the present invention which are given by the combination of the figures shapes 4a, 4b e 4c.

In a first embodiment of the present invention, the sides 20a, 20b diverge with respect to the direction of closure of the regulating valve 10, so that, if the shutter 13 is in an opening position, the free portion 200 of aperture 20 has a shape substantially triangular.

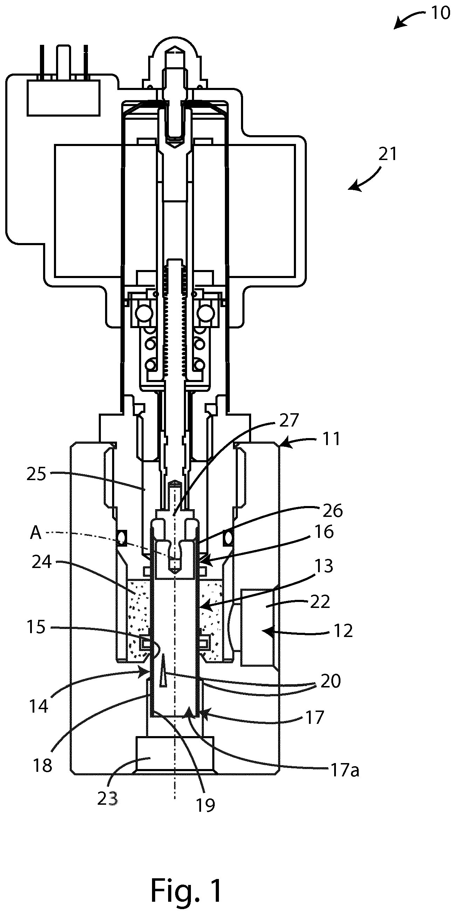

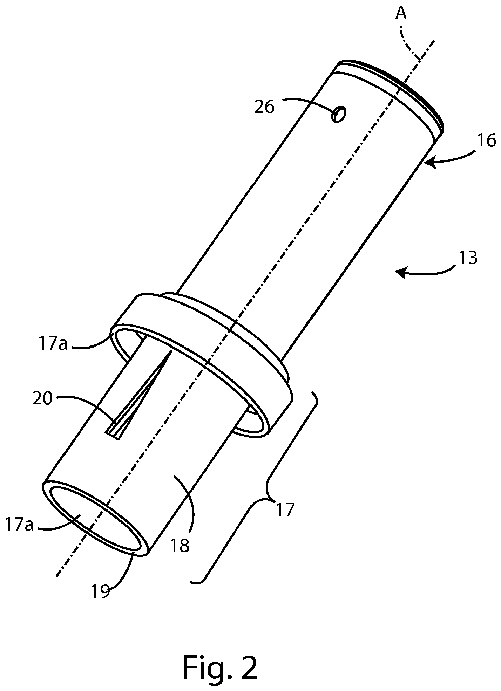

In figures 1 to 3c is provided an example, not limitative, of this first embodiment of the present invention.

A regulating valve 10 created according to a first embodiment, is particularly suitable for the applications in which is requested a fine tuning of the fluid flow.

In this first embodiment, the first portion of aperture 20 to be free for the passage of fluid is that one with less extension along a direction perpendicular to the sliding direction A.

The cusp shape of aperture 20, in this case allows a very gradual opening or closure, namely during which there is a small increment or reduction of the free portion 200 section, following the movement of the shutter 13.

In particular, the sides 20a, 20b have a profile configured so that, in case of opening/closing of the regulating valve 10, the percentage variation of the regulating valve 10 capacity is equal to the displacement, expressed in percentage with respect to the opening/closing run of the shutter 13, so to obtain a curve characteristics of the valve defined "equal-percentage", which is exemplified, identified with reference B, in Figure 5 where are represented in the x-coordinate the percentage of the opening/closing run of the shutter and in the y-coordinate the percentage of capacity.

In a second embodiment of the present invention, not shown in the attached figures, the sides 20a, 20b diverge with respect to the opening direction of the regulating valve 10, so that, if the shutter 13 is in an opening position, the free portion 200 has substantially a square-shaped and preferably a trapezoidal shape.

A regulating valve created according to such second embodiment, is particularly suitable for applications in which is requested a tuning such as "fast opening", i.e., with a quick opening mode.

In such second embodiment, the first aperture 20 portion to be free for the fluid passage is the one with a larger extension along a perpendicular direction to the sliding direction A.

With reference C in Figure 5 is shown an example of a curve typical of a valve suitable for the tuning with "fast opening".

As a matter of thoroughness, in Figure 5 is showed with a D the curve typical of a valve according to the present invention, where the opening profile or the opening of the shutter is substantially rectangular, i.e., so whereby the sides of the opening are parallel to the sliding direction of the shutter.

For clarity, in the present document, with the term "tubular" is meant that the front end 17 of the shutter comprises, and preferably consists of, a wall that bounds an internal cavity 17a.

Such a cavity 17a is advantageously opened at least toward the area in front of the front end 17.

Advantageously, the front end 17 is cylindrical, and accordingly seat 14 is also cylindrical to receive by insertion the shutter 13.

The front end 17 advantageously comprises a wall 19 parallel to the sliding direction A and having a constant thickness whereby is chosen a minimum value fit to ensure stability of form the front end 17 of the shutter 13 during the normal use of the regulating valve 10.

Advantageously, a regulating valve according to the invention, which then allows for an efficient offset of the pressures, is especially suitable to be used in the application wherein, while in use, it occurs a high difference of pressure between upstream and downstream of the regulating valve itself, such as in the case of CO2 apparatuses.

In order to exemplify exclusively and not to be limitative, a regulating valve 10 according to the invention, for example used to regulate a CO2 flow and provided to work between pressures of the latter, is comprised of substantially between 140 bar and 50 bar, advantageously it will have the front end 17 cylindrical, with diameter equal to 10 mm and comprised of stainless steel, preferably AISI 304 or the equivalent, and the thickness of the wall 19 will be preferably between 0,5 mm and 1,0 mm.

Such a regulating valve is therefore suitable to be used with a high jump of pressures between upstream and downstream which, in the specific example, consists of 90 bar.

Preferably, the shutter 13 is tubular and advantageously is cylindrical. The preferred tubular shape of the shutter 13 or of the front end 17 thereof, allows to limit the stresses acting on the shutter in operation.

The front end 17 of the shutter 13 preferably has at least an aperture 20 crossable by the fluid according to a perpendicular direction to the sliding direction A.

Advantageously, the front end 17 has a plurality of apertures 20, it is preferably cylindrical and advantageously has the openings 20 smoothly distributed along a direction circumferential to the front end 17 itself. Advantageously, in the closing position of the shutter 13, the aperture 20 is covered and closed by the internal surface 15 of seat 14, and the channel is therefore occluded; instead, in the opening position, the aperture 20 has the portion 200 free for the fluid passage.

The aperture 20 has preferably an edge 20c which is substantially straight and perpendicular to the sliding direction A.

With further details, the aperture 20 has preferably a triangular shape which has a height parallel to the sliding direction A.

With height is meant a segment that goes through a vertex of the triangle and perpendicular to the opposite side to such a vertex.

In accordance with the said first embodiment of the present invention, the aperture 20 is advantageously shaped so that the shutter 13, when is disposed in an intermediate position between the opening position and the closing position, has a first part 201 of the aperture 20 covered by the internal surface 15 of seat 14 and the free portion 200 opened for the fluid passage, wherein the first part 201 is comprised of the edge 20c, which forms the base of the triangle while the free portion 200 comprises the vertex opposed to the base.

The regulating valve 10 advantageously comprises an actuating drive 21 of the shutter 13, fit to modulate the position of the latter, controllably, between the opening and closing positions.

The rotor of the drive 21 is preferably connected to the end 16 of the shutter 13.

Preferably, the aperture 20 is shaped as an isosceles triangle which preferably has the base perpendicular to the sliding direction A.

The channel 12 advantageously is comprised of two vanes 22, 23.

The seat 14 is advantageously disposed between the vanes 22 and 23. Preferably, a first one 22 of the vanes 22, 23 protrudes perpendicularly to the sliding direction A and the second one 23 of the vanes 22, 23 protrudes parallel to the sliding direction A.

The front end 17 is advantageously provided with an internal cavity 17a which is in communication with the first vane 22.

The channel 12 preferably comprises also an outflow chamber 24, placed between the first vane 22 and seat 14, the outflow chamber 24 is advantageously annular and it is centrally crossed by the shutter 13.

The body 11 has a balancing chamber 25 wherein is slidingly inserted the back end 16 of the shutter 13, being provided, on the back end 16 at least a through hole 26 suitable to put in communication the balancing chamber 25 with the internal part of the shutter 13 and advantageously, therefore, fit to put in communication the balancing chamber 25 with the second vane 23 by the internal cavity 17a of the front end 17 of the shutter 13.

With particular reference to the affixed figures, it is advantageously provided a connector 27 implanted into the back end 16 of the shutter 13 and fixed to the rotor of the drive 21.

It is to be noted that, in the closing position of the shutter 13, the apertures 20 can be partially or completely covered and, therefore closed, from the internal wall 15 of seat 14.

In the first case, the partial coverage, the regulating valve 10 is configured so that, when the shutter 13 is in the closing position, the opening 20 part which is not engaged from the internal part 15 of seat 14 is in communication with only one of the two vanes 22 and 23 and preferably with the second vane, according with the embodiment showed in the affixed figures.

Advantageously, the regulating valve 10 is suitable to be installed along a tubing with the first vane 22 upstream 22 and the second vane 23 downstream according with the outflow direction of the fluid.

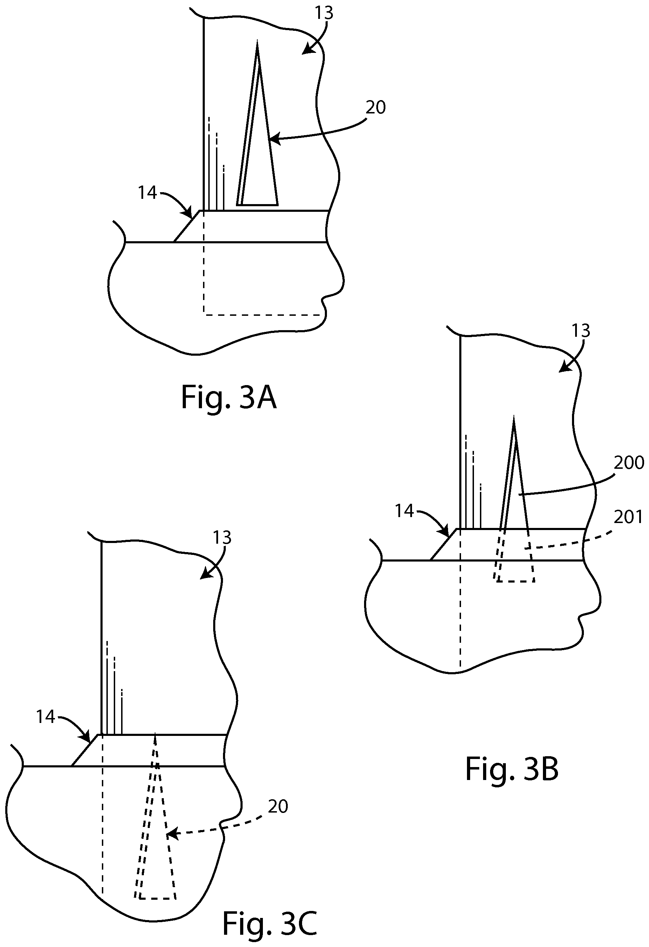

As an exclusive example and not limited, there are shown in figures 3a and 3c respectably the opening and closing positions, and in Figure 3b is shown an intermediate position between these latter ones, wherein the aperture 20 is only partially opened, and therefore, crossable by the fluid relative to the portion left free by seat 14.

In a preferred embodiment of the present invention, the shutter is a portion of a drawn tube, preferably cylindrical.

An objective also of the present invention is a production method of a regulating valve 10 that presents a specific peculiarity for that it comprises a drawing phase of a tube and a cutting phase of a piece of said tube, so to obtain from this one piece, the body of the shutter 13.

Preferably, this process comprises a phase of forming the aperture 20 on the shutter 13 by laser cutting.

In this way, the shutter 13 results extremely simple and economically convenient to create and it presents a reduced gap with the seat 14 without requesting special processings.

A regulating valve in accordance with the present invention carries in particular the following advantages:
- the coupling between the seat and the shutter occurs preferably between cylindrical surfaces than with a limited gap; such characteristics ensure some losses, given by very limited bypass capacity and therefore, an applicability of such a structure of a valve in a wide field of capacities to modulate, therefore it allows to use a valve according to the present invention even when a small size is requested;
- the building simplicity of the tubular shutter allows for a wide geometric flexibility upon the creation of the opening derived on the same, so that the present invention can create, in a simple manner, the opening shape in such a way to define the tuning curve of the valve more suitable to the application contingent of the latter.

In case of triangular opening, according to said first embodiment, such geometry allows to obtain variables of typical curves suitable to fine controlling the flow ("equal-percentages" or "deep equal-percentage") which ensures an accurate control of the capacity even with a strong reduction of the valve capacity.

In case of the solution with the tubular shutter, this last feature is exalted by the applicability of the valve structure according to the present invention in a wide interval of capacities to modulate.

In case of creation according to said second embodiment, it is obtained a regulating valve with a curve which ensures a rapid increment of the capacity already in the first part of the opening run.

A further advantage provided by a regulating valve according to the present invention is that, in use, the stresses acting on the shutter are more balanced than in traditional valves which are subject to resulting forces of greater entity and therefore require actuation drives providing greater torque thus being more bulky and expensive.

The invention so conceived is susceptible to several variations and forms, all within the scope of the appended claims.

For example, the present regulating valve can be advantageously used to regulate the gas flow in gas heaters.

In addition, all the details can be substituted by other elements technically equivalent.

In practice, the materials used, beside the contingent shapes and sizes, can be modified according to the contingent needs and the art background.

Where the constructive features and the techniques mentioned in the following claims, are executed by signs or reference numbers, such signs or reference numbers have been affixed with the only objective to increase the coherence of the claims themselves, and consequently, these do not constitute in any way a restriction to the interpretation of each element identified, as an example only, by such signs or reference numbers.

## Claims

1. Flow regulating valve (10) comprising:
- a body (11) crossed by a channel (12) for a fluid;
- a shutter (13) sliding in said body (11), along a sliding direction (A), between a closing position wherein it occludes said channel (12) and at least an opening position wherein said channel (12) is opened;
said channel (12) comprising a seat (14) for said shutter (13) provided with an internal surface (15) parallel to said sliding direction (A), said shutter (13) protruding along said sliding direction (A) between a back end (16) and a front end (17), which is provided with a side surface (18) parallel to said sliding direction (A) and coupling to the internal surface (15) of said seat (14); the ends (16, 17) of said shutter (13) being in communication to balance the fluid pressures acting upon these; said front end (17) being tubular and having at least an opening (20) crossable by a fluid according to a perpendicular direction to said sliding direction (A); in said closing position said at least one opening (20) is covered and closed by the internal surface (15) of said seat (14) and in said opening position said at least one opening (20) shows at least a free portion (200) for the fluid passage;
said regulating valve (10) being **characterized in that** said at least one opening (20) has two sides (20a, 20b) that join together to form a cusp and diverge along said sliding direction (A);
wherein said shutter (13) is a portion of a drawn cylindrical tube.

2. Regulating valve (10) according to claim 1, **characterized in that** said sides (20a, 20b) diverge with respect to the closing direction of said regulating valve (10), so that, if said shutter is in said at least one opening position, the free portion (200) of said opening (20) has a shape substantially triangular.

3. Regulating valve (10) according to claim 1, **characterized in that** said sides (20a, 20b) diverge with respect to the opening direction of said regulating valve (10), so that, if said shutter is in said at least one opening position, the free portion (200) of said opening (20) has a substantially square shape and preferably trapezoidal shape.

4. Regulating valve (10) according to the previous claims, **characterized in that** said front end (17) comprises a wall (19) parallel to said sliding direction (A) which has a constant thickness.

5. Regulating valve (10) according to anyone of the previous claims, **characterized in that** said shutter (13) is tubular.

6. Regulating valve (10) according to anyone of the previous claims, **characterized in that** said opening (20) is formed by laser cutting.

7. Regulating valve (10) according to anyone of the previous claims, **characterized in that** said at least one opening (20) has an edge (20c) substantially straight and perpendicular to said sliding direction (A).

8. Regulating valve (10) according to anyone of the previous claims, **characterized in that** said sides (20a, 20b) have a profile configured so that in case of opening/closing of said regulating valve (10) the percentage variation of the free portion (200) of said opening (20) is equal to the displacement, expressed by percentage with respect to opening/closing run of said shutter (13).

9. Regulating valve (10) according to anyone of the previous claims, **characterized in that** said channel (12) comprises two vanes (22, 23), said seat (14) being placed between said vanes (22, 23), a first one (22) of said vanes (22, 23) protruding perpendicular to said sliding direction (A) and the second one (23) of said vanes (22, 23) protruding parallel to said sliding direction (A), said front end (17) being provided with an internal cavity communicating with said second vane (23).

10. Regulating valve (10) according to claim 9, **characterized in that** said channel (12) comprises an outflow chamber (24) placed between said first vane (22) and said seat (14), said outflow chamber (24) being annular and centrally crossed by said shutter (13).

11. Regulating valve (10) according to anyone of the previous claims, **characterized in that** said body (11) has a balancing chamber (25) wherein is slidingly inserted the back end (16) of said shutter (13), being provided, upon said back end (16) at least a through hole (26) suitable to put in communication said balancing chamber (25) with the internal part of said shutter (13).

12. Production method of a regulating valve according to anyone of the previous claims, **characterized by** comprising a drawing phase of a tube and a cutting phase of a portion of said tube, said tube forming the body of said shutter (13).

13. Production method of a regulating valve according to claim 12 **characterized in that** it comprises a phase of creating said at least one opening (20) on said shutter (13) preferably by laser cutting.

## Patentansprüche

1. Regelventil (10) für den Durchfluss, umfassend:
- einen Körper (11), der von einem Kanal (12) für ein Fluid durchquert wird;
- einen Verschluss (13), der in dem Körper (11) entlang einer Gleitrichtung (A) zwischen einer Schließposition, in der er den Kanal (12) verschließt, und mindestens einer Öffnungsposition, in der der Kanal (12) geöffnet ist, gleitet;
wobei der Kanal (12) einen Sitz (14) für den Verschluss (13) umfasst, der mit einer zur Gleitrichtung (A) parallelen Innenfläche (15) versehen ist, wobei der Verschluss (13) entlang der Gleitrichtung (A) vorsteht zwischen einem rückseitigen Ende (16) und einem vorderen Ende (17), das mit einer Seitenfläche (18) parallel zur Gleitrichtung (A) versehen ist und mit der Innenfläche (15) des Sitzes (14) verbunden ist; wobei die Enden (16, 17) des Verschlusses (13) in Verbindung stehen, um die auf diese wirkenden Fluiddrücke auszugleichen; wobei das vordere Ende (17) rohrförmig ist und mindestens eine Öffnung (20) aufweist, die durch ein Fluid gemäß einer senkrechten Richtung zu der Gleitrichtung (A) kreuzbar ist; in der Schließposition ist die mindestens eine Öffnung (20) von der Innenfläche (15) des Sitzes (14) abgedeckt und geschlossen und in der Öffnungsposition weist die mindestens eine Öffnung (20) mindestens einen freien Abschnitt (200) für den Fluiddurchgang auf;
wobei das Regelventil (10) **dadurch gekennzeichnet ist, dass** die mindestens eine Öffnung (20) zwei Seiten (20a, 20b) aufweist, die sich miteinander verbinden, um eine Spitze zu bilden und entlang der Gleitrichtung (A) zu divergieren,
wobei der Verschluss (13) ein Teil eines gezogenen zylinderförmiges Rohr ist.

2. Regelventil (10) gemäß Anspruch 1, **dadurch gekennzeichnet, dass** die Seiten (20a, 20b) in Bezug auf die Schließrichtung des Regelventils (10) divergieren, so dass, wenn sich der Verschluss in der mindestens einen Öffnungsposition befindet, der freie Abschnitt (200) der Öffnung (20) eine im wesentlichen dreieckige Form aufweist.

3. Regelventil (10) gemäß Anspruch 1, **dadurch gekennzeichnet, dass** die Seiten (20a, 20b) in Bezug auf die Öffnungsrichtung des Regelventils (10) divergieren, so dass, wenn sich der Verschluss in der mindestens einen Öffnungsposition befindet, der freie Abschnitt (200) der Öffnung (20) eine im Wesentlichen quadratische Form und vorzugsweise eine Trapezform aufweist.

4. Regelventil (10) gemäß den vorhergehenden Ansprüchen, **dadurch gekennzeichnet, dass** das vordere Ende (17) eine Wandung (19) parallel zur Gleitrichtung (A) aufweist, die eine konstante Dicke aufweist.

5. Regelventil (10) gemäß einem der vorhergehenden Ansprüche, **dadurch gekennzeichnet, dass** der Verschluss (13) rohrförmig ist.

6. Regelventil (10) gemäß einem der vorhergehenden Ansprüche, **dadurch gekennzeichnet, dass** der Verschluss (20) mittels Laserschneiden hergestellt ist.

7. Regelventil (10) gemäß einem der vorhergehenden Ansprüche,
**dadurch gekennzeichnet, dass** die mindestens eine Öffnung (20) eine Kante (20c) aufweist, die im Wesentlichen gerade und senkrecht zur Gleitrichtung (A) ist.

8. Regelventil (10) gemäß einem der vorhergehenden Ansprüche, **dadurch gekennzeichnet, dass** die Seiten (20a, 20b) ein Profil aufweisen, das so konfiguriert ist, dass im Falle des Öffnens / Schließens des Regelventils (10) die prozentuale Veränderung des freien Abschnitts (200) der Öffnung (20) gleich der Verschiebung ist, ausgedrückt in Prozent in Bezug auf das Öffnen / Schließen des Verschlusses (13).

9. Regelventil (10) gemäß einem der vorhergehenden Ansprüche, **dadurch gekennzeichnet, dass** der Kanal (12) zwei Flügel (22, 23) umfasst, wobei der Sitz (14) zwischen den Flügeln (22, 23) angeordnet ist, wobei ein erster (22) der Flügel (22, 23) senkrecht zur Gleitrichtung (A) vorsteht und der zweite (23) der Flügel (22, 23) parallel zur Gleitrichtung (A) vorsteht, wobei das vordere Ende (17) mit einem inneren Hohlraum versehen ist, der mit dem zweiten Flügel (23) in Verbindung steht.

10. Regelventil (10) gemäß Anspruch 9, **dadurch gekennzeichnet, dass** der Kanal (12) eine Ausströmkammer (24) aufweist, die zwischen dem ersten Flügel (22) und dem Sitz (14) angeordnet ist, wobei die Ausströmkammer (24) ringförmig ist und durch den Verschluss (13) in der Mitte gekreuzt wird.

11. Regelventil (10) gemäß einem der vorhergehenden Ansprüche, **dadurch gekennzeichnet, dass** der Körper (11) eine Ausgleichskammer (25) aufweist, in die das hintere Ende (16) des Verschlusses (13) gleitend eingesetzt ist, wobei an dem rückseitigen Ende (16) mindestens ein Durchgangsloch (26) vorgesehen ist, , das geeignet ist, die Ausgleichskammer (25) mit dem inneren Teil des Verschlusses (13) in Verbindung zu bringen.

12. Herstellungsverfahren für ein Regelventil gemäß einem der vorhergehenden Ansprüche, **dadurch gekennzeichnet, dass** es eine Rohrziehphase und einer Rohrabschnittschneidphase umfasst, wobei das Rohr den Körper des Verschlusses (13) bildet.

13. Herstellungsverfahren für ein Regelventil gemäß Anspruch 12, **dadurch gekennzeichnet, dass** es eine Herstellphase der mindestens einen Öffnung (20) an dem Verschluss (13) umfasst, vorzugsweise durch Laserschneiden.

## Revendications

1. Soupape de régulation d'écoulement (10) comprenant :
un corps (11) traversé par un canal (12) pour un fluide ;
un obturateur (13) coulissant dans ledit corps (11), le long d'une direction de coulissement (A), entre une position de fermeture dans laquelle il bouche ledit canal (12) et au moins une position d'ouverture dans laquelle ledit canal (12) est ouvert ;
ledit canal (12) comprenant une siège (14) pour ledit obturateur (13) prévu avec une surface interne (15) parallèle à ladite direction de coulissement (A), ledit obturateur (13) faisant saillie le long de ladite direction de coulissement (A) entre une extrémité arrière (16) et une extrémité avant (17), qui est prévue avec une surface latérale (18) parallèle à ladite direction de coulissement (A) et se couplant à la surface interne (15) dudit siège (14) ; les extrémités (16, 17) dudit obturateur (13) étant en communication pour équilibrer les pressions de fluide agissant sur ces dernières ; ladite extrémité avant (17) étant tubulaire et ayant au moins une ouverture (20) pouvant être traversée par un fluide selon une direction perpendiculaire à ladite direction de coulissement (A) ; dans ladite position de fermeture, ladite au moins une ouverture (20) est couverte et fermée par la surface interne (15) dudit siège (14) et dans ladite position d'ouverture, ladite au moins une ouverture (20) représente au moins une partie libre (200) pour le passage de fluide ;
ladite soupape de régulation (10) étant **caractérisée en ce que** ladite au moins une ouverture (20) a deux côtés (20a, 20b) qui s'assemblent afin de former une cuspide et divergent le long de ladite direction de coulissement (A) ;
dans laquelle ledit obturateur (13) est une partie d'un tube cylindrique étiré.

2. Soupape de régulation (10) selon la revendication 1, **caractérisée en ce que** lesdits côtés (20a, 20b) divergent par rapport à la direction de fermeture de ladite soupape de régulation (10), de sorte que, si ledit obturateur est dans ladite au moins une position d'ouverture, la partie libre (200) de ladite ouverture (20) a une forme sensiblement triangulaire.

3. Soupape de régulation (10) selon la revendication 1, **caractérisée en ce que** lesdits côtés (20a, 20b) divergent par rapport à la direction d'ouverture de ladite soupape de régulation (10), de sorte que, si ledit obturateur est dans ladite au moins une position d'ouverture, la partie libre (200) de ladite ouverture (20) a une forme sensiblement carrée et de préférence une forme trapézoïdale.

4. Soupape de régulation (10) selon les revendications précédentes, **caractérisée en ce que** ladite extrémité avant (17) comprend une paroi (19) parallèle à ladite direction de coulissement (A) qui a une épaisseur constante.

5. Soupape de régulation (10) selon l'une quelconque des revendications précédentes, **caractérisée en ce que** ledit obturateur (13) est tubulaire.

6. Soupape de régulation (10) selon l'une quelconque des revendications précédentes, **caractérisée en ce que** ladite ouverture (20) est formée par découpe au laser.

7. Soupape de régulation (10) selon l'une quelconque des revendications précédentes, **caractérisée en ce que** ladite au moins une ouverture (20) a un bord (20c) sensiblement droit et perpendiculaire à ladite direction de coulissement (A).

8. Soupape de régulation (10) selon l'une quelconque des revendications précédentes, **caractérisée en ce que** lesdits côtés (20a, 20b) ont un profil configuré de sorte que, dans le cas de l'ouverture / fermeture de ladite soupape de régulation (10), la variation en pourcentage de la partie libre (200) de ladite ouverture (20) est égale au déplacement, exprimée en pourcentage par rapport à la course d'ouverture / fermeture dudit obturateur (13).

9. Soupape de régulation (10) selon l'une quelconque des revendications précédentes, **caractérisée en ce que** ledit canal (12) comprend deux pales (22, 23), ledit siège (14) étant placé entre lesdites pales (22, 23), une première (22) desdites pales (22, 23) faisant saillie perpendiculairement à ladite direction de coulissement (A) et la seconde (23) desdites pales (22, 23) faisant saillie parallèlement à ladite direction de coulissement (A), ladite extrémité avant (17) étant prévue avec une cavité interne communiquant avec ladite seconde pale (23).

10. Soupape de régulation (10) selon la revendication 9, **caractérisée en ce que** ledit canal (12) comprend une chambre de sortie (24) placée entre ladite première pale (22) et ledit siège (14), ladite chambre de sortie (24) étant annulaire et centralement traversée par ledit obturateur (13).

11. Soupape de régulation (10) selon l'une quelconque des revendications précédentes, **caractérisée en ce que** ledit corps (11) a une chambre d'équilibrage (25), dans laquelle est insérée, de manière coulissante, l'extrémité arrière (16) dudit obturateur (13), on prévoit, sur ladite extrémité arrière (16), au moins un trou débouchant (26) approprié pour mettre en communication ladite chambre d'équilibrage (25) avec la partie interne dudit obturateur (13).

12. Procédé de production d'une soupape de régulation selon l'une quelconque des revendications précédentes, **caractérisé en ce qu'**il comprend une phase d'étirement d'un tube et une phase de coupe d'une partie dudit tube, ledit tube formant le corps dudit obturateur (13).

13. Procédé de production d'une soupape de régulation selon la revendication 12, **caractérisé en ce qu'**il comprend une phase de création de ladite au moins une ouverture (20) sur ledit obturateur (13) de préférence par découpe au laser.
